Europäisches Patentamt

European Patent Office

Office européen des brevets

(11) Veröffentlichungsnummer: **0 164 744**
**B1**

(12) **EUROPÄISCHE PATENTSCHRIFT**

(45) Veröffentlichungstag der Patentschrift: **20.06.90**

(51) Int. Cl.⁵: **B 60 J 7/10**

(21) Anmeldenummer: **85107256.1**

(22) Anmeldetag: **12.06.85**

(54) Vorrichtung zur lösbaren Befestigung der Plane eines Lastfahrzeuges.

(30) Priorität: **15.06.84 DE 8418122 u**
**31.01.85 DE 3503149**

(43) Veröffentlichungstag der Anmeldung:
**18.12.85 Patentblatt 85/51**

(45) Bekanntmachung des Hinweises auf die
Patenterteilung:
**20.06.90 Patentblatt 90/25**

(84) Benannte Vertragsstaaten:
**AT BE CH DE FR GB IT LI LU NL SE**

(56) Entgegenhaltungen:
**BE-A- 881 751**
**US-A-2 911 254**

(73) Patentinhaber: **Robert Thomas Metall- und
Elektrowerke
Hellerstrasse 6
D-5908 Neunkirchen (DE)**

(72) Erfinder: **Thomas, Otto
Obere Kirchbergstrasse 3
D-5908 Neunkirchen (DE)**

(74) Vertreter: **Grosse, Dietrich, Dipl.-Ing. et al
Patentanwälte HEMMERICH-MÜLLER-GROSSE-
POLLMEIER-MEY Hammerstrasse 2
D-5900 Siegen 1 (DE)**

Beschreibung

Die Erfindung betrifft eine Vorrichtung zum lösbaren Verbinden unterer Bereiche einer den Laderaum eines Lastkraftwagens, Anhängers oder Sattelaufliegers überfangenden, mit verstärkt ausgebildeten Randstreifen ausgestatteten Plane mit den Laderaum umgrenzenden Wandungen bzw. Bracken vermittels von mit diesen Wandungen schwenkbar verbundener und gegen diese schwenkbarer Halteleisten, die an ihren freien Enden mit gegen die Wandungen gerichteten Vorsprüngen ausgestattet sind, welche Randstreifen der Plane zu übergreifen vermögen, und denen zu ihrer Bedienung jeweils mit mehreren Hebeln versehene Betätigungsvorrichtungen zugeordnet sind, welche deren Vorsprünge zum Einführen von Randstreifen der Plane von den Wandungen abzuheben sowie, Randstreifen der Plane übergreifend, klemmen gegen die Wandungen zu führen und/oder in der Klemmstellung zu fixieren vermögen (Siehe die US—A—2,911,254).

Gebräuchliche Kraftfahrzeuge, deren Anhänger oder Sattelauflieger sind in ihren von Planen übergriffenen Bereichen mit in relativ geringen Abständen vorgesehenen, normal von der Wandung abstehenden und gegebenenfalls schwenkbaren Bügeln ausgestattet, und der untere Planenrand weist in gleichen Abständen durch Metallösen eingefaßte Öffnungen auf. Zum Befestigen der Plane werden die Ösen über die Bügel geführt und formschlüssig gesperrt. Dieses kann durch Drehen oder Umlegen der Bügel erreicht werden; meist jedoch wird durch die Bügel eine die Plane und die in diese eingelassenen Ösen übergreifende Kordel, bspw. aus Kunststoff, gezogen. Für den grenzüberschreitenden Verkehr sind zusätzliche Maßnahmen getroffen, um die Bügel bzw. die Kordel nach erfolgtem Verschluß auch zollamtlich versiegeln zu können.

Als nachteilig hat es sich herausgestellt, daß schon bei der Anbringung der Bügel besonders darauf zu achten ist, daß deren Anordnung mit der der Ösen der Plane übereinstimmt, um den Verschluß überhaupt zu ermöglichen, aber auch um die Plane möglichst spannungsfrei zu halten und ein Flattern derselben während der Fahrt sowie die Überlastung einzelner Ösen zu vermeiden, zumal ohnedies diese Ösen hoch beansprucht werden und damit zum Ausreißen aus der Plane neigen. Als ungünstig haben sich auch die von der Brackenwand abstehenden Bügel erwiesen, die selbst bei starker Abrundung Tendenzen zur Verletzung von Personen oder Beschädigungen nicht auszuschließen vermögen. Als nachteilig wird weiterhin empfunden, daß die Vielzahl der Verbindungsstellen das Festzurren der Plane umständlich und zeitraubend gestaltet.

Nach der US—A—2 911 254 sollen Planen relativ einfach und sicher gehalten werden, indem ihre unteren Randbereiche über eine mit der Wandung des Fahrzeuges fest verbundene Profilleiste gelegt werden und gegen diese vermittels von Betätigungsvorrichtungen eine zweite Profilleiste schwenkbar ist, welche, das über die erste Profilleiste herabhängende Ende nach hinten umschlagend, den unteren Randbereich der Plane spannt. Als nachteilig macht sich jedoch der relativ hohe Erstellungsaufwand ebenso bemerkbar wie dier noch unerwünscht hohe Bedienungsaufwand. Die Betätigungsvorrichtungen nämlich sind derart ausgebildet, daß, um die erforderliche Anpressung zu erreichen, jeweils ein linear geführtes und eine vorgespannte Feder ausweisendes Verbindungsglied erforderliche wird, und die Anpreßleisten lassen sich zwar mit dem Umlegen nur eines Hebels der Betätigungsvorrichtungen anlegen, ein sicherer Halt aber wird erst erreicht, wenn auch die Hebel der weiteren Betätigungsvorrichtungen fest angelegt sind.

Nach der BE—A—881 751 wird eine Ausbildung empfohlen, bei der eine Andruckleiste vermittels von beidendig gelenkig abgestützen Hebeln oder Leisten zunächst einrückbar und dann anpreßbar ist. Bei der Verwendung einzelner Hebel sind auch diese jeweils zu betätigen, und beim Einsatz durchgehender Leisten lassen diese sich nicht ausreichend verwindungssteif ausbilden, so daß auch hier eine Betätigung an unterschiedlichen Stellen entlang der Leisten vorgenommen werden muß. Damit aber werden weder die Vorteile eines einfachen Aufbaues noch die einer einfachen Bedienung erreicht.

Die Erfindung geht daher von der Aufgabe aus, eine Vorrichtung zum lösbaren Verbinden einer ein Fahrzeug überfangenden Plane mit dessen den Laderaum umgrenzenden Wandungen nach der vorangestellten Gattung nach der US—A—2,911,254 zu schaffen, die unter Benutzung nur einer vorzugsweise einer Anzahl von entlang einer Wandung vorgesehenen Betätigungsvorrichtungen es gestattet, den Rand einer Plane durch Anlegen von Halteleistung zu fixieren oder durch Abheben derselben freizugeben.

Gelöst wird diese Aufgabe mit den Merkmalen des Patentanspruches 1. Durch Anwendung nur eines Riegelelementes ergibt sich die Möglichkeit, dieses vermittels einer beliebigen der einzelnen Betätigungsvorrichtungen fixierend anzulegen und auch wieder abzuheben. Die Riegelelemente können hierbei als mehr oder weniger durchgehende Exzenter ausgebildet sein, deren Schwenkwinkel sich von jedem Hebel einer Betätigungsvorrichtung einstellen läßt. Als gemeinsames Riegelelement kann aber auch eine bspw. längsverschiebbare Riegelstange vorgesehen sein, die durch Längsverschiebung Riegel hintergreift und durch eine gegensinnige Bewegung Riegel freigibt. Auch hier genügt im Prinzip die Betätigung eines der Hebel, und zur Entriegelung wird der gleiche Hebel in seine Freistellung zurückgelegt.

Direkte Vorzugsstellungen der Plane bzw. von Befestungsvorrichtung entfallen hierbei, und das Fixieren der Plane selbst gestaltet sich äußerst einfach: Es ist nur mehr nötig, das untere Ende der Plane nach gegebenenfalls erforderlichen Glatt- bzw. Strammziehen der Plane in den zwischen Wandung und Halteleiste gebildeten Spalt einlaufen zu lassen und dann mittels nur eines Hebels der Betätigungsvorrichtungen einer Halteleiste deren von der Wandung abgefedertes bzw. abgeschwenktes Profilende gegen die Plane und gegen die Wandung zu pressen. Auch ein Zollverschluß läßt sich hierbei leicht berücksichtigen. Damit wird nicht nur die Herstellung der Befestigungsvorrichtung selbst vereinfacht und verbilligt, auch die Handhabung wird vereinfacht und ergibt damit eine Zeit- und, als deren Folge, eine Kostenersparnis.

Die Erfindung weiterbildende Maßnahmen sind in den Unteransprüchen gekennzeichnet.

Im einzelnen sind die Merkmale der Erfindung anhand der Beschreibung von Ausführungsbeispielen in Verbindung mit dieses darstellenden Zeichnungen erläutert. Es zeigen hierbei:

Figur 1 die Ansicht eines Bereiches einer Bracke eines LKW mit dem abgebrochen dargestellten übergreifenden Bereich einer Plane,

Figur 2 ein Querschnitt einer abgebrochen dargestellten Bracke mit einem bereits in die Haltevorrichtung eingelegten Randbreiche einer Plane,

Figur 3 eine der Fig. 2 entsprechende Darstellung mit geschlossen gezeigter Haltevorrichtung,

Figure 4 im Querschnitt ein anderes Ausführungsbeispiel einer Bracke mit einem vor die Haltevorrichtung geführten Bereiche einer Plane,

Figur 5 die Anordnung nach Fig. 5 mit geschlossen gezeigter Haltevorrichtung,

Figur 6 Ansicht eiens Bereiches der Bracke der Fig. 4 und 5 mit dem abgebrochen dargestellten übergreifenden Bereiche einer Plane,

Figur 7 einen abgebrochenen Horizontalschnitt durch die Bracke der Fig. 4 bis 6 bei abgeschwenktem Schließhebel, und

Figur 8 eine der Fig. 7 entsprechende Darstellung mit in der Schließstellung eingerastetem Schließhebel.

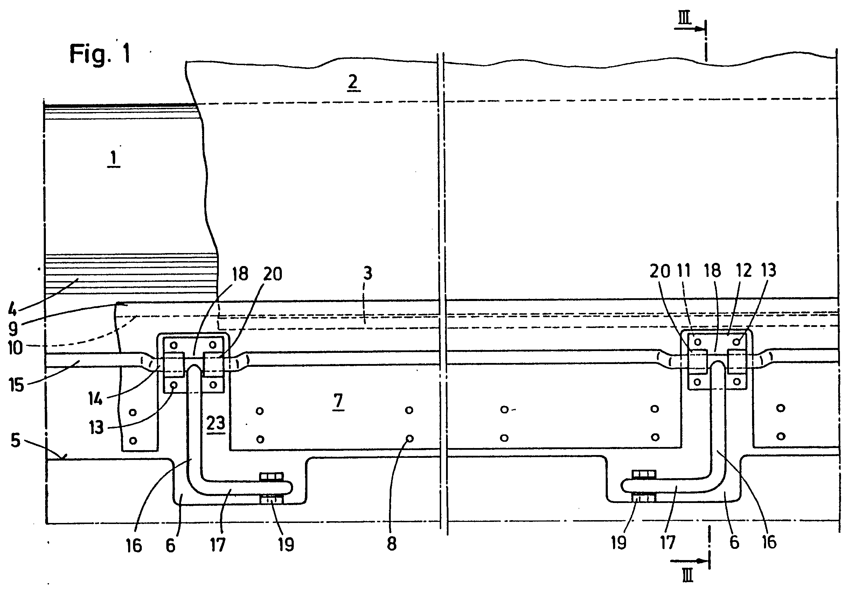

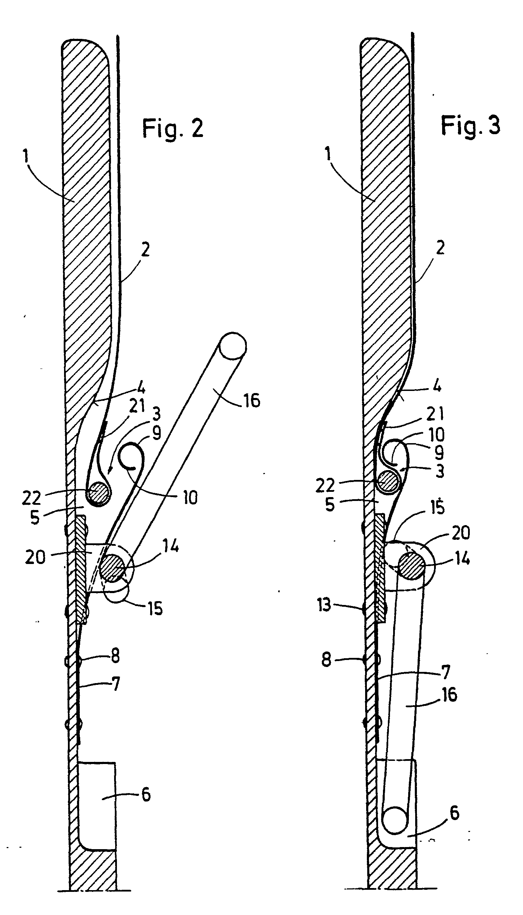

In Fig. 1 ist die Ansicht eines Bereiches einer Bracke 1 eines LKW dargestellt, dessen Laderaum von einer abgebrochen dargestellten Plane 2 umzogen ist, deren unterer Randstreifen 3 mittels einer Haltevorrichtung fixiert ist. Wie auch die Fig. 2 und 3 zeigen, ist in die Bracke 1 eine Rampe 4 eingearbeitet, welche den oberen Abschluß einer Ausnehmung 5 bildet, die bereichsweise durch angesetzte Taschen 6 nach unten verlängert ist. Innerhalb der Ausnehmung 5 ist vermittels von Nieten 8 der untere Bereich einer Halteleiste 7 mit dem Grunde der Ausnehmung 5 verbunden, während das obere, freie Ende 9 der Halteleiste 7 eine gegen die Bracke gerichtete Abbiegung 10 aufweist, die gemäß den Fig. 2 und 3 als annähernd kreisförmiger Wulst ausgebildet ist.

Über Ausnehmungen 23 der Halteleiste 7 sind Böcke befestigt, wobei gemäß Fig. 1 jeweils eine Sockelplatte 11 durch eine Schalenplatte 12 gleicher Grundfläche abgedeckt ist sowie die Schalenplatte beidendig in ihrem mittleren Bereiche U-förmig ausgebogen ist und die Sockel- und die Schalenplatte mit dem Grunde der Ausnehmung 5 durch Niete 13 verbunden sind. In den durch die Sockel- und die Schalenplatte gebildeten Lagerböcken 20 ist ein Rundstahl 14 gelagert, der außerhalb der Lagerböcke zu Exzenterstäben 15 ausgekröpft ist und zwischen den Böcken 20 mit eine Hebel 16, bspw. durch Schweißen, fest verbunden ist, dessen freies Ende 17 rechtwinklig abgebogen ist. Damit wird der Hebel und mit ihm der Rundstahl 14 in dem zwischen den Böcken 20 gebildeten Kulissenschlitz 18 geführt.

Die Halteleiste 7 ist entsprechend der Fig. 2 mit ihrem Grundprofil so ausgebildet, daß bei mit dem Grunde der Ausnehmung 5 verbundenem unteren Profilende das mit der Abbiegung 10 ausgestattete obere freie Profilende 9 frei von der Bracke 1 absteht. Die Bracke 1 entspricht hierbei weitgehend der der Fig. 1; ihr oberes vorderes Ende ist leicht abgerundet, um lokale Belastungen und lokalen Verschleiß der Plane 2 zu unterbinden. Gegenüber der Fig. 1 allerdings sind die Böcke 20 als einstückig, bspw. durch Spritz- oder Druckguß, erstellte Böcke aufgezeigt. Die Fig. 2 veranschaulicht darüber hinaus, daß nach Hochschwenken des Hebels 16 in die in der Fig. 2 gezeigte Stellung und, damit verbunden, nach Abheben der Exzenterstäbe 15 von den Halteleisten 7, dem Auffedern von deren freiem Ende 9 und dem Abheben der Abbiegung 10 das freie Ende der Plane 2 in den zwischen dem Boden der Ausnehmung 5 und dem freien Ende 9 der Halteleiste 7 gebildeten Spalt eingeführt werden kann. In den durch den Randstreifen 3 gebildeten Saum 21 der Plane 2 ist ein sogenanntens Bleiband 22 eingelegt, wie es bspw. von Gardinen her bekannt ist und durch Bleikügelchen gebildet wird, die in einen gewirkten Schlauch eingebracht sind. An die Stelle eines solchen Bleibandes 22 können aber auch andere den Saum 21 verstärkende Mittel gesetzt werden, so bspw. Kunststoffstränge, Kunststoffkordeln, Seile, aber auch Metall-, Draht-, Drahtseilstücke oder andere Mittel. Bleibänder haben sich im vorliegenden Falle sowohl ihrer Geschmeidigkeit wegen als auch ihres Gewichtes, mittels dessen sie das Einführen erleichtern, bewährt.

Die Befestigung der Plane erfolgt nun durch einfaches Umlegen des Hebels 16 aus seiner in Fig. 2 dargestellten in die in Fig. 3 gezeigte Lage. Der Hebel schwenkt hierbei um den als Lagerzapfen dienenden Rundstahl 14. Dessen ausgekröpfte Exzenterstäbe beschreiben hierbei um die Achse des Rundstahles 14 einen Kreisbogen und werden als Exzenter gegen die Halteleiste 7 geschwenkt, die sie dann unter elastischer Durchbiegung derselben gegen den Boden der Ausnehmung 5 führen. Da die Exzenterstäbe 15 hierbei den Totpunkt überschreiten, wird die erreichte Lage des Hebels 16 selbsttätig fixiert. Weiterhin wird hierbei das obere freie Ende 9 der Halteleiste gegen den unteren Abschluß der Rampe 4 bzw. den Grund der Ausnehmung 5 geschwenkt, und seine wulstförmige Abbiegung 10 übergreift hierbei den verstärkten Saum 21 der Plane 2. Damit aber ist die Plane entlang der gesamten Länge ihres Saumes im gewünschten Sinne festgelegt, so daß örtliche Überlastungen sicher vermieden sind.

Auch die Bedienung gestaltet sich außerordentlich einfach: Entlang einer Bracke wird zweckmäßig ein durchgehender Rundstahl 14 verwendet, aus dem Exzenterstäbe 15 ausgekröpft sind, so daß zum Freigeben der Plane es praktisch genügt, einen der Hebel 16 in die in Fig. 2 dargestellte Lage hochzuziehen, und andererseits nach Anlegen der Plane gemäß Fig. 2 das Herabschwenken eines einzigen der Hebel 16 das obere freie Ende der Halteleiste 7 in die Verschlußstellung zu bringen vermag. Die Ausnehmung 5 in der Bracke 1, im Bereiche der Hebel ergänzt durch die Taschen 6, vermögen die gesamte Haltevorrichtung versenkt in sich aufzunehmen, so daß vorstehende Teile vermieden sind. Andererseits kann im Bedarfsfalle auf Ausnehmungen weitgehend verzichtet werden, oder es können Ausnehmungen nur für die freien Enden der Hebel vorgesehen sein. Auch in diesem Falle werden geringere Vorsprünge erzielt, als sie bei üblichen Bügeln erforderlich werden.

Im Bedarfsfalle läßt sich die Vorrichtung zur Befestigung von Planen auch weiter variieren. So können bspw. Lochgabeln 19 oder entsprechende Winkel im Bereiche der Hebel 16 oder deren freier Enden angeordnet sein, die eine übliche Plombierung erlauben. Gegebenenfalls können auch die Hebel selbst mit Löchern zum Durchziehen eines Siegelbandes versehen sein. Schließlich können Lochgabel oder entsprechende einfache Schenkel durch Ansätze der Sockelplatten 11 oder Schalenplatten 12 gebildet werden.

Im Interesse einer einfachen Bedienung sind durchgehende, die Exzenterstäbe 15 einschließende Rundstähle beschrieben. Es ist aber auch möglich, insbesondere wenn gegebenenfalls nur Abschnitte der Plane festgelegt werden sollen, die Exzenter zu unterteilen und bspw. je Exzenter bzw. Exzenterpaar einen Hebel vorzusehen. In diesem Falle könnten auch relativ kurze Exzenter verwendet werden und die Hebel um vertikal gestellte Achsen schwenkbar sein. Schließlich können zweite kurze Hebelarme als Exzenter wirken.

Andererseits ist es aber auch möglich, auf Exzenter völlig zu verzichten. So könnte eine Betätigungsvorrichtung auch durch normal von Bracken vorstehenden, Ausnehmungen der Halteleiste durchgreifenden Laschen gebildet werden, die mit Löchern bzw. Durchbrechungen so ausgestattet sind, daß Stifte oder Keile so einschiebbare sind, daß durch sie das freie Ende 8 der Halteleiste 7 gegen die Bracke geführt wird. Solche Stifte, Keile oder dergleichen könnten durch Kettchen mit den Laschen unverlierbar verbunden sein, eine Nase des Keilrückens könnte als Arretierung wirken, und in den Stiften bzw. Keilen vorgesehene Bohrungen könnten zum Plombieren benutzt werden. Zur einfacheren Handhabung könnten auch hier Keile oder Stifte durch Stangen miteinander verbunden sein.

Darüber hinaus sind weitere, das freie ende der Halteleisten gegen die Bracken fürhende Betätigungsvorrichtungen möglich: So können zwar Wellen der Betätigungsvorrichtung mit mehreren Hebeln verbunden sein. bspw. um eine Betätigung von unterschiedlichen Stellen aus bewirken zu können. Im allgemeinen genügt es aber, je Welle einen Hebel zum Betätigen derselben vorzusehen.

Darüber hinaus können die Anzahl sowie die Abstände der Hebel durch zollamtliche Bestimmungen bestimmt werden. Das Fixieren der Plane jedoch erfolgt praktisch kontinuierlich, so daß die üblichen, durch die Bestimmungen für den Zollverschluß verlangten Abstände, bspw. Abstände von 15 oder 25 cm, unterschritten werden, da innerhalb einer Bracke die Befestigung der Plane lückenlos erfolgt.

Es ist ferner nicht erforderlich, wie im Ausführungsbeispiel beschrieben, Wellen auszukröpfen: Es können auch in vorgegebenen Abständen mit den Wellen auf diese aufgezogene Exzenter verbunden sein, und im einfachsten Falle genügt es, in solchen vorgegebenen Abständen kurze, einseitig auskragende Stifte so mit den Wellen zu verbinden, daß sie beim Umlegen des Hebels zum Fixieren gegen das freie Ende der Halteleiste geführt werden und dieses mit seiner Abbiegung gegen den Planenrand drücken, wobei zweckmäßig zum Erreichen einer Selbstsperrung der tote Winkel überschritten wird. Solche Querstifte könnten einer abgedrehten Schaft aufweisen, der durch eine Bohrung der Welle gesteckt wird, und dessen Ende durch Nieten, ggfs. auch Schweißen, mit der Welle verbunden ist. In jedem Falle hat es sich als wesentlich erwiesen, verstärkte End- bzw. Saumbereiche der Planen vermittels sie übergreifender Leisten zu fixieren, wobei weder Vorzugsstellungen erforderlich sich noch die Fixierung sich auf eng begrenzte Bereiche beschränkt, so daß lokale Überlastungen vermieden sind. Darüber hinaus ist die Erfindung nicht an Bracken gebunden; jeder Bereich eines Fahrzeuges, der von einem Planenende übergriffen ist, kann vermittels von Halteleisten und zugeordneten Betätigungsvorrichtungen zum Fixieren herangezogen werden.

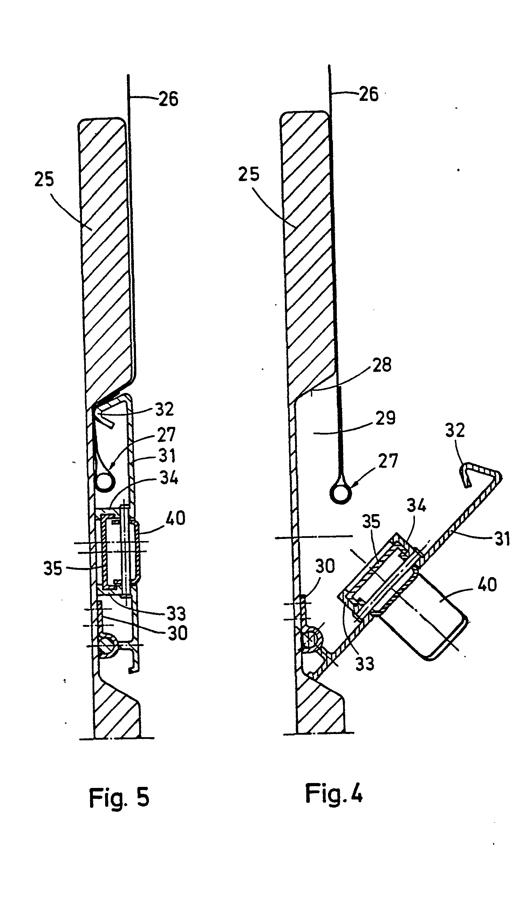

Wie bereits erwähnt, ist die erfindungsgemäß Befestigung von Planen nicht auf Bracken beschränkt; es empfiehlt sich jedoch, bei Brackensegmenten die Halteleiste über diese durchlaufen zu lassen. Das Ausbiegen des oberen freien Endes der Halteleisten kann, wie schon aufgeführt, auch durch weitere Betätigungsvorrichtungen bewirkt werden. So kann bspw. das Fixieren unter Vorspannung erfolgen und die Betätigungsvorrichtung das freie Ende zum Lösen der Plane oder zum Einführen derselben abheben. Die Betätigung und/oder Arretierung kann ferner durch Spanndorne, Haken oder dergleichen, bewirkt werden. Wie das anhand der Fig. 4 bis 8 folgend beschriebene Ausführungsbeispiel zeigt, ist es auch nicht erforderlich, die Halteleiste federnd auszubilden: Es kann eine schwenkbare Halteleiste vorgesehen sein, die gegebenenfalls zusätzlich durch Federn vorspannbar ist.

Die Fig. 4 zeigt im abgebrochenen Vertikalschnitt eine Bracke 25, die bereichsweise von einer Plane 26 überfangen ist. Der untere Randstreifen 27 der Plane ist durch einen in den umgeschlagenen Saum eingelegten Kunststoffstrang verstärkt; im Endbereich tritt die Bracke über eine abgerundet ansetzende Rampe 28 zu einer Ausnehmung 29 zurück.

Im unteren Bereiche der Ausnehmung 29 sind mit der Bracke 25 Scharniere 30 verbunden, die zweckmäßig über eine angearbeitete bzw. eingeschobene Achse, schwenkbar eine Halteleiste 31 tragen, die zweckbäßig als Strangpreßprofil erstellt ist, so daß sich im in Fig. 5 dargestellten geschlossenen Zustande eine glatte Außenfläche ergibt. Nach oben ist das Profil der Halteleiste 31 durch einen durchgehenden Vorsprung 32 abgeschlossen, und im mittelen Bereiche sind nach hinten weisende Rippen 33, 34 angeschlossen, welche einerseits die Halteleiste 31 versteifen und andererseits in einander zugekehrten Nuten eine U-förmig profilierte Riegelstange 35 führen.

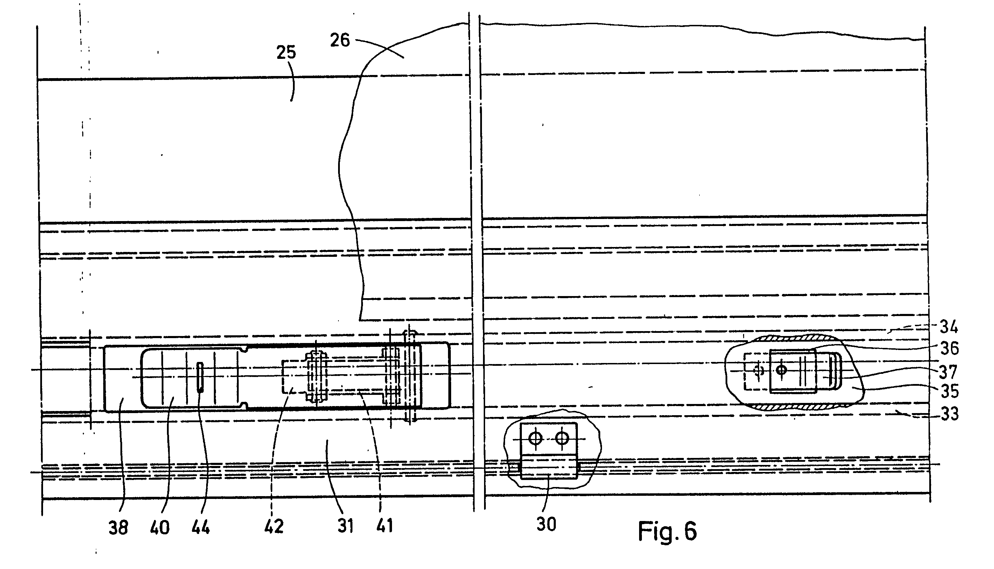

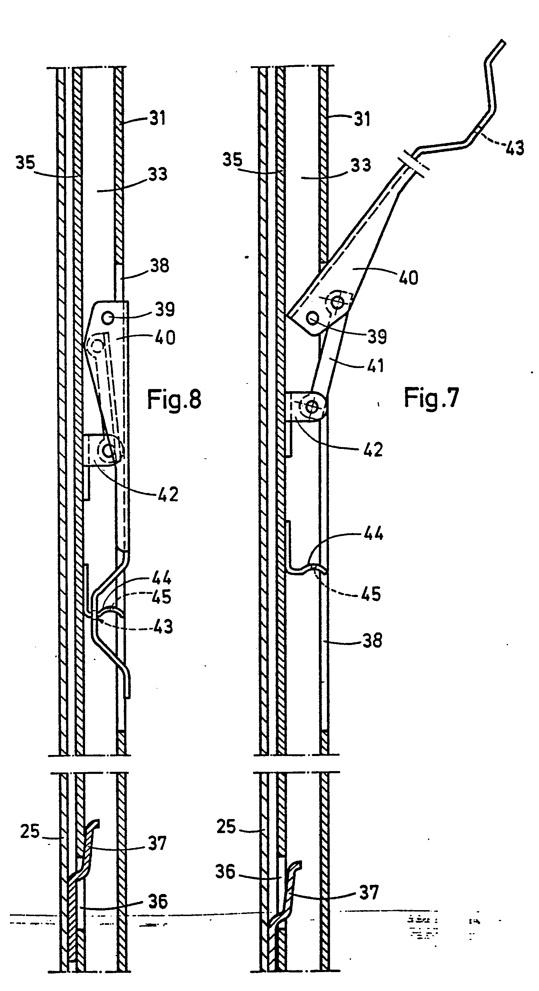

Wie die Ansicht der Fig. 6 und die Horizontalschnitte der Fig. 7 und 8 zeigen, ist die Riegelstange 35 mit Öffnungen 36 ausgestattet, die im unverriegelten Zustande über hakenartig ausgebogenen Riegeln 37 stehen, die mit der Bracke 25 fest verbunden sind.

In die Halteleiste 31 sind Fenster 38 eingearbeitet, innerhalb deren von Bohrungen der Rippen 33, 34 getragene Bolzen 39 angeordnet sind. Auf den Bolzen sind Schließhebel 40 gelagert, an die ihrerseits Lenker 41 angelenkt sind, deren freie Enden schenkbar mit Böcken 42 verbunden sind, die ihrerseits mit der Riegelstange 35 fest verbunden sind. Die Freien Enden der Schließhebel 40 sind, wie insbesondere die Fig. 7 und 8 zeigen, nach innen ausgekröpft und weisen einen Rastschlitz 43 auf, der beim Andrücken des betreffenden Schließhebels über eine Rastfeder 44 geführt und durch diese gehalten wird. Das freie Ende der Rastfeder ist mit einer Öffnung 45 ausgestattet, um Drähte, Fäden oder dergleichen zum Zwecke einer zollamtlichen Versiegelung aufzunehmen.

Zur Befestigung der Plane 26 wird die sich wiederum über die Länge einer Bracke erstreckende Halteleiste 31 in die in Fig. 4 gezeigte Stellung zurückgeschwenkt. Nach Einlegen des Randstreifens 27 der Plane 26 wird die Halteleiste 31 aus der in Fig. 4 gezeigten herabgeschwenkten Stellung nach oben in die in Fig. 5 gezeigte Stellung geschwenkt, in der der durchgehende Vorsprung 32 den Randstreifen 27 der Plane festlegt. Bei diesem Anschwenken ist auch die zwischen den Rippen 33 und 34 verschiebbar gehaltene Riegelstange 35 gemäß Fig. 7 gegen die Bracke 25 verschwenkt worden, so daß die Riegel 37 durch die Öffnungen 36 treten.

Nunmehr wird der Schließhebel 40 aus der in Fig. 7 ersichtlichen Stellung in die der Fig. 8 umgeschwenkt. Mit dem Lenker 41 bildet er ein Kniehebelgetriebe, das beim Einschwenken des Schließhebels 40 die Riegelstange 35 in ihrer durch die Nute der Rippen 33, 34 gebildeten Führung nach links bzw. in der Fig. 7 nach unten verschiebt. Hierbei schieben sich Randbereiche der Öffnung 36 unter die Riegel 37, die nunmehr die Riegelstange 35 und damit die Halteleiste 31 in ihrer hochgeschwenkten, in Fig. 5 gezeigten Stellung fixieren. Beim endgültigen Andrücken des Schließhebels 40 wird dessen Rastschlitz 43 durch die Rastfeder 44 rastend durchgriffen, so daß der Schließhebel in seiner in Fig. 8 dargestellten angelegten Stellung schon durch diese Rastfeder gehalten wird. Gleichzeitig aber ist das durch den Schließhebel 40 und den Lenker 41 gebildete Kniehebelgetriebe so ausgebildet, daß beim endgültigen Andrücken des Schließhebels 40 diese Kniehebelgetriebe seinen Totpunkt überschreitet und damit sich zusätzlich selbst sperrt.

In der Ansicht der Fig. 6 ist das geschlossene durchgehende Profil der Halteleiste 31 mit seiner nach außen weisenden glatten Oberfläche, die Schmutz wenig Ansatzpunkte bietet, zu erkennen. Ein Scharnier 30 sowie ein eine Öffnung 36 der Riegelstange 35 übergreifender Riegel 37 sind durch Ausbrechungen erkennbar. Im Fenster 38 ist ein Schließhebel 40 erkennbar, der zusätzlich durch die Rastfeder 44 in seiner Grundstellung gehalten ist, in der er, wie die Fig. 5 und 8 zeigen, über die Außenkontur nicht bzw. praktisch nicht vorsteht. Andererseits läßt sich durch das hochgekröpfte freie Ende der Schließhebel zum Zwecke des Lösens leicht erreichen.

Die vermittels der Riegelstange 35 und der Riegel 37 durchgeführte Verriegelung hält nicht nur die Halteleiste 31 in ihrer Arbeitstellung fest, die zweckmäßig schräg ausgeführte Haltefläche der Riegel 37 bewirkt auch eine zusätzliche Anstellung der Halteleiste 31 und damit einen zusätzlichen, auf den Randstreifen 27 der Plane ausgeübten Anpreßdruck und damit auch eine weitere Versteifung der Plane. Die eigentliche Verriegelungsmechanik liegt gegen Verschmutzung und Korrosion weitgehend geschütz innerhalb des Profiles der Halteleiste 31.

Die gesamte Anordnung besticht nicht nur dadurch, daß sie über das Fahrzeugprofil seitlich nicht hinaussteht, als vorteilhaft erweist sich die mehrfache Sicherung in der Arbeitsstellung durch das Überschreiten des Totpunktes der Kniehebelmechanikl, die Einrastung des freien Endes des Schließhebels und schließlich die selbsthemmende Verriegelung selbst. Hierbei können sowohl relativ hohe Riegelkräfte aufgebracht werden als auch die Verriegelung mühelos gelöst werden, da die Verschiebung durch die Kniehebelmechanik hoch übersetzt durch den langen Schießhebel 40 bewirkt wird.

Die Erfindung ist nicht auf die beschriebenen bzw. variierten Ausführungsbeispiels beschränkt. Es ist bspw. auch möglich, in an sich bekannter Weise mit Ösen ausgestattete Planen vorzusehen und auf eine umlaufende Halteleiste zu verzichten: Die Befestigungsvorrichtung für die mit Ösen ausgestattete Plane weist auch in diesem Falle eine in Böcken gelagerte, mit mindestens einem Hebel ausgestatte Welle auf, die in dem der Ösen angeglichenen Teilungsabstand mit einseitig auskragenden Querstiften ausgestattet ist. In diesem Falle ist es möglich, durch Schwenken der Welle vermittels des Hebels die Querstifte in die Ösen so eingreifen zu lassen, daß die Querstifte nunmehr die Plane über deren Ösenkanten halten. Gesichert wird ein solcher Eingriff, indem die Querstifte in gesonderten Nuten der Bracke, der Bordwand oder dergleichen laufen, so daß sie ausreichend durch die Ösen durchtreten. Eine weitere Sicherung kann erreicht werden, indem die Querstifte hakenartig so abgebogen sind, daß sie mit dem Hakenende eingreifen und das Hakenende in der Arbeitsstellung ein Abrutschen der Ösen unterbindet. Hierbei ist es möglich, bei gestraffter Plane die Querstifte von unten her in Eingriff der Ösen zu bringen und den Schwenkweg der Welle durch Anschläge zu begrenzen, die bspw. auf den Hebel wirken. Damit ist ein selbsttätiges Lösen unter Spannung sicher unterbunden. Es ist aber auch möglich, die Haken von oben her in die Ösen eingreifen zu lassen; in diesen Falle ist die Welle nach Durchführen der Spannbewegung zu sichern.

Selbst bei Verstärkung eines Planenrandes ist eine Anzahl von Varianten möglich. So können Stränge, Drähte oder Kabel aus Kunststoff oder Metall in dern Saum eingelegt sein, und es können Metall- oder Kunststoffkugeln bzw. -stifte eingelegt werden, die zweckmäßig durch Überziehen eines Schlauches, eines gewirkten Strumpfes oder dergleichen in vorgegebener Lage gehalten sind. So lassen sich Befestigungsvorrichtungen für Planen schaffen, die leicht und sicher bedienbar sowie gegebenenfalls siegelbar sind, und bei denen im wesentlichen durch kontinuierliche Halterung lokale Überlastungen vermieden und jeder fremde unbemerkte Zugriff unterbunden sind.

**Patentansprüche**

1. Vorrichtung zum lösbaren Verbinden unterer Bereiche einer den Laderaum eines Lastkraftwagens, Anhängers oder Sattelaufliegers überfangenden, mit verstärkt ausgebildeten Randstreifen (3, 27) ausgestatteten Plane (2, 26) mit den Laderaum umgrenzenden Wandungen bzw. Bracken (1, 25) vermittels von mit diesen Wandungen (1, 25) schwenkbar verbundener und gegen diese schenkbarer Halteleisten (7, 31), die an ihren freien enden (9) mit gegen die Wandungen gerichteten Vorsprüngen (10, 32) ausgestattet sind, welche Randstreifen (3, 27) der Plane zu übergreifen vermögen, und denen zu ihrer Bedienung jeweils mit mehreren Hebeln (16, 40) versehene Betätigungsvorrichtungen zugeordnet sind, welche deren Vorsprünge (10, 32) zum Einführen von Randstreifen (3, 27) der Plane von den Wandungen (1, 25) abzuheben sowie, Randstreifen (3, 27) der Plane übergreifend, klemmend gegen die Wandungen (1, 25) zu führen und/oder in der Klemmstellung zu fixieren vermögen, dadurch gekennzeichnet, daß die Betätigungsvorrichtungen ein sich jeweils über die Länge der Halteleisten (7, 31) erstreckendes Riegelelement (15, 35) aufweisen, an das die Hebel (16, 40) angreifen.

2. Vorrichtung nach Anspruch 1, dadurch gekennzeichnet, daß die Hebel (16) in von den Wandungen (1) getragenen Böcken (20) gelagert sind und mit die freien Enden (9) der Halteleisten (7) abstützenden Exzentern (Exzenterstäbe 15) ausgestattet sind.

3. Vorrichtung nach Anspruch 2, dadurch gekennzeichnet, daß Halteleisten (7) an einem ihrer Profilenden mit der Wandung (Bracke 1) fest verbunden sind, und daß ihre freien Profilenden (9) von diesen federnd abstehend sich gegen die Mantelflächen der Exzenter (Exzenterstäbe 15) legen.

4. Vorrichtung nach Anspruch 3, dadurch gekennzeichnet, daß die Halteleisten (7) unterbrochen ausgeführt sind und/oder Ausnehmungen (23) zum Durchtritt der Böcke (20) der Betätigungsvorrichtung aufweisen.

5. Vorrichtung nach einem der Ansprüche 2 bis 4, dadurch gekennzeichnet, daß die Hebel (16) der Betätigungsvorrichtung die Exzenter aufweisen.

6. Vorrichtung nach einem der Ansprüche 2 bis 4, dadurch gekennzeichnet, daß Lagerzapfen (Rundstahl 14) der Hebel (16) sich vorzugsweise beidseitig über die Böcke (20) hinaus erstrecken und zur Bildung von Exzentern aus deren Achse ausgekröpft sind (Exzenterstäbe 15).

7. Vorrichtung nach Anspruch 6, dadurch gekennzeichnet, daß die Betätigungsvorrichtungen jeweils einen in Böcken (20) gelagerten durchgehenden und außerhalb der Böcke mehrfach ausgekröpften Stab (Rundstahl 14) mit Exzenterstäben (15) aufweisen, der im Bereich der Böcke mit Hebeln (16) ausgestattet ist.

8. Vorrichtung nach einem der Ansprüche 1 bis 6, dadurch gekennzeichnet, daß mit mindestens einem Hebel (16) verbundene Wellen als Exzenter aus diesen auskragende Stifte aufweisen.

9. Vorrichtung nach Anspruch 8, dadurch gekennzeichnet, daß die Haltevorrichtungen für mit Ösen ausgestattete Planen (2) in Böcken (20) gelagerte, mit mindestens einem Hebel (16) ausgestatte Wellen aufweist, die in dem der Ösen angeglichenen Teilungsabstand mit einseitig auskragenden kurzen Querstiften ausgestattet sind.

10. Vorrichtung nach Anspruch 9, dadurch gekennzeichnet, daß die Querstifte in Betätigungsrichtung der Welle hakenartig ausgebogen sind.

11. Vorrichtung nach einem der Ansprüche 1 bis 10, dadurch gekennzeichnet, daß Halteleisten (31) an ihren den Vorsprüngen (32) abgewandten Randstreifen mit der Wandung (Bracke 25) vermittels von Schwenkgelenken (Scharnier 30) verbunden sind.

12. Vorrichtung nach Anspruch 11, dadurch gekennzeichnet, daß die Halteleisten jeweils eine Riegelstange (35) längsverschieblich führen, die durch Vorschieben durch Hintergreifen von Riegeln (37) mit der Wandung (Bracke 25) verbindbar und durch Rückschieben von ihr lösbar ist.

13. Vorrichtung nach Anspruch 12, dadurch gekennzeichnet, daß die Wandung (Bracke (25) mit in der entriegelten Stellung der Riegelstange (35) Öffnungen (36) derselben durchgreifenden Riegeln (37) versehen ist, die nach Verschieben der Riegelstange Randbereiche der Öffnungen hintergreifen.

14. Vorrichtung nach Anspruch 12, dadurch gekennzeichnet, daß die Riegelstange (35) mit Riegeln (37) ausgestattet ist, die nach Verschieben der Riegelstange in ihre Arbeitsstellung an oder in der Wandung (Bracke 25) angeordnete Riegelflächen hintergreifen.

15. Vorrichtung nach einem der Ansprüche 11 bis 14, dadurch gekennzeichnet, daß die Halteleisten (31) schwenkbare Schließhebel (40) aufweisen, die über Lenker (41) mit der Riegelstange (35) verbunden sind.

16. Vorrichtung nach einem der Ansprüche 1 bis 15, dadurch gekennzeichnet, daß Hebel (16) und Exzenter bzw. das durch Schließhebel (40) und Lenker (41) gebildete Kniehebelgetriebe beim Umlegen in die Betätigungsstellung über einen Totpunkt geführt werden.

17. Vorrichtung nach einem der Ansprüche 1 bis 16, dadurch gekennzeichnet, daß die Hebel (16, 40) Öffnungen, angebogene Ösen oder Enden (17) zum Hindurchführen eines Siegeldrahtes oder dergleichen aufweisen und/oder in ihrer Arbeitsstellung zwischen mit solchen Öffnungen, Löchern oder Ösen ausgestatteten Gabeln (Lochgabel 19) liegen.

18. Vorrichtung nach einem der Ansprüche 1 bis 17, dadurch gekennzeichnet, daß der Betätigungsvorrichtung im Bereich der Hebel (16, 40) bzw. Hebelenden (17) mit Bohrungen ausgestattete, normal auf der Wandung (Bracke 1) stehende laschen, Ösen oder Gabeln (Lochgabel 19) zugeordnet sind.

19. Vorrichtung nach einem der Ansprüche 1 bis 18, dadurch gekennzeichnet, daß Schenkel, Laschen, Ösen oder Gabeln als Hebel (16, 40) arretierende Restfedern (44) ausgebildet sind.

20. Vorrichtung nach Anspruch 19, dadurch gekennzeichnet, daß die Rastfeder (44) in der Grundstellung des Hebels (40) einen Rastschlitz (43) desselben durchgreift.

**Revendications**

1. Dispositif pour la liaison déverrouillable de zones inférieures d'une bâche (2, 26) recouvrant le compartiment de marchandises d'un camion, d'une remorque ou d'une semi-remorque, comportant des bandes latérales renforcées (3, 27), avec des parois ou montants (1, 25) délimitant le compartiment de marchandise, à l'aide de profilés de maintien (7, 31) reliés de manière articulée à ces parois (1, 25) et basculables contre celles-ci, qui sont munis à leurs extrémités libres (9) de parties en saillie (10, 32) orientées vers les parois, qui sont aptes à s'engager sur les bandes latérales (3, 27) de la bâche et auxquels sont associés, en vue de leur commande, des dispositifs de commande chaque fois équipés de plusieurs leviers (16, 40), qui sont aptes à écarter des parois (1, 25) les parties en saillies (10, 32) desdits profilés pour l'introduction das bandes latérales (3, 27) de la bâche ainsi qu'à mener les bandes latérales (3, 27) de la bâche par engagement sur celles-ci de manière serrée contre les parois (1, 25) et/ou à les maintenir en position serrée, caractérisé en ce que les dispositifs de commande comportent un organe de verrouillage (15, 35) qui s'étend chaque fois sur la longueur des profilés de maintien (7, 31) et sur lequel agissent les leviers (16, 40).

2. Dispositif selon la revendication 1 caractérisé en ce que les leviers (16) sont logés dans des paliers (20) solidaires des parois (1) et sont munis d'excentriques (tringles excentriques 15) formant appui pour les extrémités libres (9) des profilés de maintien (7).

3. Dispositif selon la revendication 2, caractérisé en ce que les profilés de maintien (7) sont solidarisés par l'une de leurs extrémités de profilé à la paroi (1) et en ce que leurs extrémités de profilé libres (9) prennent appui contre les surfaces extérieures des excentriques (tringles excentriques 15) en s'écartant à la manière d'un ressort desdites parois (1).

4. Dispositif selon la revendication 3 caractérisé en ce que les profilés de maintien (7) sont interrompus et/ou présentent des entailles (23) pour le passage des paliers (20) du dispositif de commande.

5. Dispositif selon l'une quelconque des revendications 2 à 4 caractérisé en ce que les leviers (16) du dispositif de commande sont équipés des excentriques.

6. Dispositif selon l'une quelconque des revendications 2 à 4, caractérisé en ce que des tourillons (barre ronde en acier 14) des leviers (16) s'étendent de préférence des deux côtés au-delà des paliers (20) et sont coudés hors de leur axe en vue de former les excentriques (tringles excentriques 15).

7. Dispositif selon la revendication 6 caractérisé en ce que les dispositifs de commande comportent chaque fois une tringle continue (barre ronde en acier (14) logée dans des paliers (20) et plusieurs fois coudée à l'extérieur de ceux-ci, avec des tringles excentriques (15), tringle équipée de leviers (16) dans la zone des paliers.

8. Dispositif selon l'une quelconque des revendications 1 à 6 caractérisé en ce que des arbres reliés à au moins un levier (16) comportent, comme excentrique, des têtons faisant saillie sur eux.

9. Dispositif selon la revendication 8 caractérisé en ce que les dispositifs de maintien destinés à des bâches (2) munies d'oeillets comportent des arbres logés dans des paliers (20), équipés d'au moins un levier (16) et pourvus selon l'écartement entre oeillets de courts têtons transversaux en saillie d'un côté.

10. Dispositif selon la revendication 9 caractérisé en ce que les têtons transversaux sont courbés à la manière d'un crochet dans la direction de commande de l'arbre.

11. Dispositif selon l'une quelconque des revendications 1 à 10 caractérisé en ce que des profilés de maintien (31) sont reliés à la paroi (25), par leur bord opposé aux parties en saillie (32), à l'aide d'articulations de pivotement (articulation 30).

12. Dispositif selon la revendication 11, caractérisé en ce que les profilés de maintien servent de guide au coulissement longitudinal de chaque fois une tringle de verrouillage (35) qui est reliable à la paroi (25) par la course par l'arrière de verrous (37) et désolidarisable de celle-ci par le retour desdits verrous.

13. Dispositif selon la revendication 12, caractérisé en ce que la paroi (25) est munie de verrous

(37) qui traversent des ouvertures (36) de la tringle de verrouillage (35) en position de déverrouillage de celle-ci et qui s'étendent par l'arrière de zones latérales des ouvertures après coulissement de la tringle de verrouillage.

14. Dispositif selon la revendication 12 caractérisé en ce que la tringle de verrouillage (35) est munie de verrous (37) qui s'étendent par l'arrière de surfaces de verrouillage agencées sur la paroi (25) ou dans celle-ci, après coulissement de ladite tringle de verrouillage en position de fonctionnement.

15. Dispositif selon l'une quelconque des revendications 11 à 14 caractérisé en ce que les profilés de maintien (31) comportent des leviers de fermeture pivotables (40) qui sont reliés à la tringle de verrouillage (35) par des biellettes (41).

16. Dispositif selon l'une quelconque des revendications 1 à 15 caractérisé en ce que les leviers (16) et les excentriques ou l'assemblage à genouillére constitué par le levier de fermeture (40) et la biellette (41) sont menés par un point mort lors du basculement en position de fonctionnement.

17. Dispositif selon l'une quelconque des revendications 1 à 16 caractérisé en ce que les leviers (16, 40) présentent des ouvertures, des oeillets repliés ou des extrémités (17) permettant le passage d'un fil de scellés ou analogue et/ou sont agencés, en position de fonctionnement, entre des fourches (fourche 19) munies de telles ouvertures, perçages ou oeillets.

18. Dispositif selon l'une quelconque des revendications 1 à 17 caractérisé en ce que des colliers, oeillets ou fourches (fourche percée 19) munies de perçages et agencées perpendiculairement à la paroi (1) sont associées au dispositif de commande dans la zone des leviers (16, 40) ou des extrémités de levier (17).

19. Dispositif selon l'une quelconque des revendications 1 à 18, caractérisé en ce que les pattes, colliers, oeillets ou fourches consistent en des ressorts d'arrêt (44) bloquant les leviers (16, 40).

20. Dispositif selon la revendication 19 caractérisé en ce que le ressort d'arrêt (44) traverse une fente d'arrêt (43) du levier (40) en position de repos de celui-ci.

**Claims**

1. A device for detachable connection of the bottom areas of a canvas hood (2, 26) which covers the loading space of a lorry, trailer or semitrailer and is equipped with edge-strips (3, 27) of reinforced construction, to walls or dropsides (1, 25) bounding the loading space, by means of retainer strips (7, 31) which are connected pivotally to these walls (1, 25) and able to pivot against them and are equipped at their free ends (9) with projections (10, 32) which are directed towards the walls and capable of overlapping edge-strips (3, 27) of the hood and for their operation are associated with actuator mechanisms which are provided in each case with a number of levers (16, 40) and are capable of raising their projections (10, 32) from the walls (1, 25) for the introduction of edge-strips (3, 27) of the hood as well as of overlapping the edge-strips (3, 27) of the hood and carrying them against the walls (1, 25) to clamp them and/or of fixing them in the clamped position, characterized in that the actuator mechanisms exhibit a bolt member (15, 35) which extends in each case over the length of the retainer strips (7, 31) and with which the levers (16, 40) engage.

2. A device as in Claim 1, characterized in that the levers (16) are supported in brackets (20) carried by the walls (1) and are equipped with eccentrics (eccentric rods 15) which bear against the free ends (9) of the retainer strips (7).

3. A device as in Claim 2, characterized in that the retainer strips (7) are connected firmly at one of their profiled ends to the wall (dropside 1) and that their free profiled ends (9) standing out from the former springily are laid against the surfaces of the eccentrics (eccentric rods (15).

4. A device as in Claim 3, characterized in that the retainer strips (7) are made interrupted and/or exhibit recesses (23) for the brackets (20) of the actuator mechanism to pass through.

5. A device as in one of the Claims 2 to 4, characterized in that the levers (16) of the actuator mechanism exhibit the eccentrics.

6. A device as in one of the Claims 2 to 4, characterized in that the journals (steel rod 14) of the levers (16) preferably extend on both sides beyond the brackets (20) and are offset from their axis for the formation of eccentrics (eccentric rods (15).

7. A device as in Claim 6, characterized in that the actuator mechanisms exhibit in each case a continuous rod (steel rod 14) supported in brackets (20) and offset a number of times outside the brackets by eccentric rods (15) and equipped in the regoin of the brackets with levers (16).

8. A device as in one of the Claims 1 to 6, characterized in that shafts connected to at least one lever (16) exhibit pins projecting out of them as eccentrics.

9. A device as in Claim 8, characterized in that for canvas hoods (2) equipped with eyes the retainer devices exhibit shafts which are supported in brackets (20) and equipped with at least one lever (16) and are equipped at a pitch to match the eyes with short crosspins projecting out to one side.

10. A device as in Claim 9, characterized in that the crosspins are bent out like a hook in the direction of actuation of the shaft.

11. A device as in one of the Claims 1 to 10, characterized in that the retainer strips (31) at their edge-strips remote from the projections (32) are connected to the wall (dropside 25) by means of swivels (hinges 30).

12. A device as in Claim 11, characterized in that the retainer strips in each case guide one bolt rod (35) to be able to shift longitudinally, which by sliding forwards may be connected to the wall (dropside 25) by engaging behind bolts (37) and by sliding back may be released from it.

13. A device as in Claim 12, characterized in that the wall (dropside 25) is provided with bolts (37) which in the unbolted position of the bolt rod (35) engage through openings (36) in it, and which after shifting of the bolt rod engage behind edge zones of the openings.

14. A device as in Claim 12, characterized in that the bolt rod (35) is equipped with bolts (37) which after shifting of the bolt rod into its working position engage behind bolt faces arranged on or in the wall (dropside 25).

15. A device as in one of the Claims 11 to 14, characterized in that the retainer strips (31) exhibit pivotable locking levers (40) which are connected to the bolt rod (35) via connecting rods (41).

16. A device as in one of the Claims 1 to 15, characterized in that the levers (16) and eccentrics or respectively the toggle mechanism formed by the locking lever (40) and connecting rod (41) are carried over a deadcentre upon reversing into the position of actuation.

17. A device as in one of the Claims 1 to 16, characterized in that the levers (16, 40) exhibit openings, bent eyes or ends (17) for leading through a sealing wire or the like and/or in their working position lie between forks (hole fork 19) equipped with such openings, holes or eyes.

18. A device as in one of the Claims 1 to 17, characterized in that tongues, eyes or forks (hole fork 19) equipped with drilled holes and standing normally to the wall (dropside 1) are associated with the actuator mechanism in the region of the levers (16, 40) or respectively of the ends (17) of the levers.

19. A device as in one of the Claims 1 to 18, characterized in that legs, tongues, eyes or forks are made as catch springs (44) locking the levers (16, 40).

20. A device as in Claim 19, characterized in that the catch spring (44) in the normal position of the lever (40) engages through a catch slot (43) in it.

Fig. 1

Fig. 2

Fig. 3

Fig. 5          Fig. 4

Fig. 6

EP 0 164 744 B1

Fig.8

Fig.7